# EUROPÄISCHE PATENTSCHRIFT

(11) **EP 1 007 828 B1**
(45) Veröffentlichungstag und Bekanntmachung des Hinweises auf die Patenterteilung: **22.01.2003**
(21) Anmeldenummer: 98931911.6
(22) Anmeldetag: 14.04.1998
(51) Int. Cl.: F02B 23/10

(54) **ZÜNDUNG UND VERBRENNUNG BEI EINER BRENNKRAFTMASCHINE**
IGNITION AND COMBUSTION IN AN INTERNAL COMBUSTION ENGINE
ALLUMAGE ET COMBUSTION DANS UN MOTEUR A COMBUSTION INTERNE

(30) Priorität: 10.04.1997 DE 19714796; 03.06.1997 DE 19723182
(43) Veröffentlichungstag der Anmeldung: 14.06.2000
(73) Patentinhaber: Latsch, Reinhard, Dr., 76530 Baden-Baden (DE)
(72) Erfinder: Latsch, Reinhard, Dr., 76530 Baden-Baden (DE)
(74) Vertreter: Naumann, Ulrich, Dr.-Ing.
(86) Internationale Anmeldenummer: DE9801047
(87) Internationale Veröffentlichungsnummer: WO98045588

(56) Entgegenhaltungen:
- EP-A- 0 464 622
- DE-A- 1 526 293
- DE-A- 2 529 074
- DE-A- 3 129 869
- FR-A- 1 338 162
- GB-A- 1 331 334
- PATENT ABSTRACTS OF JAPAN vol. 95, no. 6, 31. Juli 1995 & JP 07 063076 A (DAIHATSU), 7. März 1995

## Beschreibung

Die Erfindung betrifft eine Brennkraftmaschine mit Kraftstoff-Direkteinspritzung und Fremdzündung, wobei der Brennraum durch einen Zylinderblock, einen Zylinderkopf und einen Kolben gebildet, in der Kolbenoberfläche eine Mulde ausgebildet und der Kraftstoff von einer Einspritzdüse in Richtung der Mulde einspritzbar und über eine Funkenzündeinrichtung zündbar ist, und wobei die Mulde im Kolben derart positioniert und ausgebildet bzw. dimensioniert ist, dass die Funkenzündeinrichtung oder ein Träger der Funkenzündeinrichtung bereits vor Erreichen des Zündzeitpunkts zumindest mit ihrem freien Ende in die Mulde mit geringem Spiel eintaucht und bei Erreichen des oberen Totpunkts des Kolbens mit geringem Spiel in die Mulde eingetaucht ist und dabei die Mulde zumindest weitgehend ausfüllt.

Die Erfindung geht von einem Stand der Technik aus, wie er aus der DE-A-31 29 869 bekannt ist. Aus dieser Druckschrift ist im Konkreten eine fremdgezündete Brennkraftmaschine mit Ladungsschichtung bekannt. Für diese Brennkraftmaschine ist wesentlich, dass dort die Funkenzündeinrichtung und die Einspritzdüse integral zu einem Bauteil vereint sind und dass die die Funkenzündeinrichtung und die Einspritzdüse umfassende Einheit beweglich ausgeführt ist, nämlich dem Ventil zugeordnet ist.

Die bekannte Brennkraftmaschine bzw. die dort realisierte Technik ist in der Praxis jedoch problematisch, da die Einspritzung über ein bewegliches Bauteil - das Ventil - erfolgt. Die Einleitung des Kraftstoffs bishin zur Einspritzdüse ist zur Vermeidung von Leckageproblemen bzw. zur Gewährleistung der erforderlichen Dichtigkeit des Systems äußerst aufwendig und daher kostenintensiv. Des weiteren ist es äußerst problematisch, die Zündung über ein bewegliches Teil - das Ventil - vorzunehmen, da dort stets die Gefahr von Kurzschlüssen bzw. Nebenschlüssen gegeben ist.

Ausgehend von dem aus der DE-A-31 29 869 bekannten Stand der Technik liegt der vorliegenden Erfindung daher die Aufgabe zugrunde, eine Brennkraftmaschine der gattungsbildenden Art derart auszugestalten und weiterzubilden, dass bei einfachster Konstruktion die beim Stand der Technik auftretenden Probleme bzw. Nachteile zumindest weitgehend vermieden sind.

Die erfindungsgemäße Brennkraftmaschine löst die voranstehende Aufgabe durch die Merkmale des Patentanspruches 1. Danach ist die gattungsbildende Brennkraftmaschine dadurch gekennzeichnet, dass die Funkenzündeinrichtung oder der Träger der Funkenzündeinrichtung und die Einspritzdüse als voneinander unabhängige Bauteile ortsfest dem Zylinderblock zugeordnet sind und daß die Einspritzdüse derart angeordnet und ausgerichtet ist, dass die Einspritzstrahlachse zu der Kolbenachse abgewinkelt ist.

Erfindungsgemäß ist erkannt worden, dass eine sichere Funktion der beanspruchten Brennkraftmaschine dann möglich ist, wenn die Funkenzündeinrichtung und die Einspritzdüse ortsfest angeordnet sind. Insoweit wird von dem gattungsbildenden Stand der Technik abgewichen, wonach sowohl die Funkenzündeinrichtung als auch die Einspritzdüse einem beweglichen Bauteil, nämlich dem Ventil, zugeordnet sind. Des weiteren wird - ebenfalls in erfindungsgemäßer Weise - von der im Stand der Technik manifestierten Kombination aus Funkenzündeinrichtung und Einspritzdüse abgegangen. In Abweichung zu dem Stand der Technik ist nämlich bei der erfindungsgemäßen Brennkraftmaschine eine separate Funkenzündeinrichtung und eine separate Einspritzdüse vorgesehen. Beide Bauteile sind unabhängig voneinander ausgestaltet und angeordnet, wodurch sich die Konstruktion der beanspruchten Brennkraftmaschine ganz erheblich vereinfacht.

Während die Funkenzündeinrichtung derart ausgebildet und angeordnet ist, dass sie bereits vor Erreichen des Zündzeitpunkts zumindest mit ihrem freien Ende in die Mulde mit geringem Spiel eintaucht und bei Erreichen des oberen Totpunkts des Kolbens mit geringem Spiel in die Mulde eingetaucht ist und dabei die Mulde zumindest weitgehend ausfüllt, ist die Einspritzdüse derart angeordnet und ausgerichtet, dass die sich ergebende Einspritzstrahlachse zu der Hauptachse der Kolbenbewegung und somit zu der Kolbenachse abgewinkelt ist. Insoweit wird gewährleistet, dass sich im Verlaufe der Kolbenbewegung zumindest kurzzeitig eine in die Mulde gerichtete Einspritzstrahlachse ergibt, wobei im Verlaufe der Kolbenbewegung sich zumindest kurzzeitig die Projektion des Einspritzstrahlkegels auf den Kolben und die Mulde zumindest teilweise überdecken.

Obwohl die Einspritzstrahlachse abseits der Kolbenachse liegt, reicht diese zumindest teilweise Überdeckung aus, um hinreichend Kraftstoff in die Mulde zu verbringen. Im Gegensatz zu der aus dem Stand der Technik bekannten Brennkraftmaschine ist insoweit weiter erkannt worden, dass eine Anreicherung von Kraftstoff in der Mulde auch im Rahmen einer solchen konkreten Anordnung möglich ist, ohne dass nämlich ein Zwang zur koaxialen Anordnung von Funkenzündeinrichtung und Einspritzdüse besteht. Ganz im Gegenteil kann die Einspritzdüse abseits der Funkenzündeinrichtung angeordnet sein, wobei eine Ausrichtung auf die Mulde in erfindungsgemäßer Weise erforderlich, aber auch ausreichend ist.

Mit der erfindungsgemäßen Brennkraftmaschine ist jedenfalls eine einfache Konstruktion innerhalb der Brennkammer realisiert, wonach nämlich die Funkenzündeinrichtung und die Einspritzdüse als separate, ortsfeste Bauteile realisiert sind, wobei die Einspritzdüse abseits der Kolbenachse angeordnet und entsprechend ausgerichtet ist und wonach dennoch eine hinreichende Versorgung der Mulde mit Kraftstoff möglich ist, ohne die Funkenzündeinrichtung und die Einspritzdüse beweglich und/oder koaxial zueinander anzuordnen.

Die Vorkehrung besonderer Funkenzündeinrichtungen, insbesondere von Vorkammer-Funkenzündeinrichtungen, begünstigt einerseits eine besonders weitgehende Gemischanreicherung an der Zündstelle und andererseits eine verbesserte Reproduzierbarkeit der Gemischzusammensetzung sowie Homogenisierung im Bereich des Zündfunkens. Gleichzeitig kann durch die von der Vorkammer-Zündeinrichtung erzeugten Zündfackeln eine besonders schnelle und gleichmäßige Verbrennung eines besonders mageren Kraftstoff-Luft-Gemischs bei geringen Schadstoffemissionen erreicht werden.

Besondere Vorteile hinsichtlich der Kraftstoffaufbereitung bei niedriger Temperatur der Kolbenoberfläche und/des Kraftstoff-Luft-Gemischs ergeben sich dann, wenn zur Zündung eine Vorkammer-Funkenzündeinrichtung bzw. Vorkammer-Zündkerze verwendet wird. Hierbei befindet sich die Zündstelle innerhalb einer mit Spiel an die Mulde angepaßten, im wesentlichen zylindrischen Vorkammer. Beim Eintauchen der Vorkammer in die Mulde entwickeln sich zwischen dieser und der Außenwand der Vorkammer sehr hohe Strömungsgeschwindigkeiten. Dadurch wird der evtl. auf der Oberfläche der Mulde vor dem Eintauchen der Vorkammer noch verbliebene Rest an flüssigem Kraftstoff abgetragen und zerstäubt.

Ein weiterer Vorteil der Vorkammer-Funkenzündeinrichtung besteht darin, daß nach Zündung des in der Kammer befindlichen Gemischs Zündfackelstrahlen erzeugt werden, die sich radial von der Vorkammer in den weiteren Brennraum hinein ausbreiten. Dieser Vorgang führt zu einer besonders gleichmäßigen und schnellen Verbrennung des restlichen, sehr mageren Kraftstoff-Luft-Gemischs und zu niedrigen NOx-Emissionen.

Sofern zumindest ein Teil des direkt eingespritzten Kraftstoffs auf die Oberfläche der im Kolben ausgebildeten Mulde und/oder deren Umgebung auf den Kolbenboden und/oder in Form von mit Kraftstoff angereichertem Gemisch in die Mulde und/oder deren Umgebung gelangt und nach Eintauchen der Funkenzündeinrichtung in die Mulde gezündet wird, führt die Expansion der durch die Verbrennung entstehenden heißen Gase in Verbindung mit einer sog. Quetschströmung zwischen Kolben und Zylinderkopf und/oder Funkenzündeinrichtung zu einer im wesentlichen kolbenbodennahe Strömung heißer Brenngase in den weiteren Brennraum hinein.

Die Kraftstoff-Direkteinspritzung erfolgt dabei entweder während des Ansaugvorgangs und/oder während des Kompressionsvorgangs der Brennkraftmaschine. In jedem Fall wird ein Teil des Kraftstoffs im wesentlichen in Richtung auf die Mulde gespritzt. Um dieses zu erreichen, ist es besonders vorteilhaft, wenn die Einspritzstrahlachse in einem besonders kleinen Winkel zur Hauptachse des Brennraums, d.h. möglichst steil auf den zentralen Bereich des Kolbenbodens, gerichtet wird. Das erfordert eine enge Nachbarschaft von Funkenzündeinrichtung und Einspritzventil.

Bei einer alternativen Ausgestaltung wird bei Annäherung an die OT-Stellung des Kolbens aus der Mulde eine Vorkammer gebildet, die über einen kreisringförmigen Überströmkanal in radialer Richtung mit dem Hauptbrennraum verbunden ist. Bei einer weiterführenden Variante mit Vorkammer-Funkenzündeinrichtung wird über kreisförmige Überströmkanäle eine im wesent lichen sternförmige radiale Flammenausbreitung aus der Vorkammer heraus erzeugt. Auch eine Kombination beider zuvor genannter Varianten ist möglich.

Durch das Eintauchen einer besonders vorteilhaften Vorkammer-Funkenzündeinrichtung in die Kolbenmulde wird zusätzlich eine intensive, ringförmige Stömung entgegen der vorgenannten, im oberen Bereich des Brennraums zum Zentrum des Brennraums gerichteten Strömung erzeugt, was zu einer schnellen Vermischung des kraftstoffreichen Gemischs aus der Mulde und der Umgebung der Vorkammer-Funkenzündeinrichtung mit Luft bzw. magerem Gemisch führt. Dank der Verwendung einer geeigneten bzw. besonderen Funkenzündeinrichtung, insbesondere einer Vorkammer-Funkenzündeinrichtungen, läßt sich gezielt und mit geringem Aufwand eine intensive, sich vor allem gleichmäßig und radial ausbreitende Strömung heißer Gase im engeren Bereich der Mulde erreichen.

Zur Funkenzündung des Gemischs in der Mulde kann eine übliche Zündkerze mit mindestens einer fingerförmigen Masseelektrode verwendet werden. Zur Zündung sind hier aber auch andere Ausführungsformen denkbar, wie z.B. eine Anordnung, bei der die Masseelektrode stiftförmig in den Kolben eingelassen ist. Bei dieser Variante würde z.B. der bei der Verbrennung in der Anfangsphase störende Einfluß der Masseelektrode entfallen. Zur Zündung kann selbstverständlich auch eine Gleitfunkenzündeinrichtung verwendet werden, bei der der Zündfunken auf dem Keramik-Steinfuß einer Zündkerze erzeugt wird.

Um einerseits eine möglichst große Menge des innerhalb der Mulde befindlichen Kraftstoffs während des Kompressionsvorgangs in die Vorkammer-Funkenzündeinrichtung zu lenken, können die Überströmkanäle im vorderen Bereich als Diffusor, d.h. sich zum freien Ende hin aufweitend, ausgebildet sein. Die Diffusorform bewirkt gleichzeitig, daß beim Austritt der verbrannten heißen Gase aus der Vorkammer-Funkenzündeinrichtung eine schnelle Auffächerung der Fackelstrahlen und damit eine frühzeitige Annäherung der heißen Gase an den Kolbenboden erfolgt. Da die maximale Austrittsgeschwindigkeit der heißen Brenngase aus der Vorkammer und die Strahldicke deutlich größer ist als die der aus dem Ringkanal ausströmenden Gase, wird der Kernbereich der Fackelstrahlen bei ihrem Eintritt in den Brennraum nur wenig beeinflußt.

Die Lage und Neigung der Überströmkanäle gegenüber dem Kolbenboden wird so gewählt, daß sich einerseits eine gute Abdampfung des Kraftstoffs ergibt und andererseits der Wärmeübergang zum Kolben und damit die Verluste gering bleiben.

Um einen möglichst großen Anteil des innerhalb der Mulde befindlichen Kraftstoffs in die Vorkammer-Funkenzündeinrichtung gelangen zu lassen, und gleichzeitig während des Ausströmvorgangs der heißen Brenngase die thermische Belastung der Mulde und dabei insbesondere des Bodenbereichs zu vermindern, sind Verbindungsbohrungen bzw. Überströmkanäle zwischen der Stirnseite der Vorkammer-Funkenzündeinrichtung und den sonstigen Überströmkanälen vorteilhaft, wobei während des Füllvorgangs der Vorkammer Kraftstoff-Luft-Gemisch aus dem Bodenbereich der Mulde durch Strahlpumpenwirkung angesaugt wird. Durch den gleichen Effekt wird beim Ausströmem der heißen Brenngase über die Überströmkanäle ein Eindringen dieser Gase in den Bodenbereich der Mulde unterdrückt bzw. vermindert.

Eine besonders gut anpaßbare kolbenbodennahe Strömung heißer Brenngase in der Umgebung der Mulde wird dadurch erreicht, daß während des Eintauchvorgangs der Vorkammer in die Mulde die erzeugten Fackelstrahlen auf die Innenwand der Mulde treffen und im Ringspalt zwischen Vorkammer-Außenwand und Muldenwand eine Drallströmung erzeugen, die nach dem Austritt der heißen Gase aus dem Ringspalt eine sich an die Oberfläche des Kolbenbodens bzw. der äußeren großen Mulde bzw. des erweiterten Bereichs der Mulde anlegende Drallströmung aus heißen Brenngasen bewirken.

Um die thermische Belastung des Kolbens hierbei sicher zu beherrschen, ist es vorteilhaft, die Mulde mit einer Hülse aus hochwarmfestem Material auszukleiden. Eine Auskleidung der Mulde ist auch bei einer anderen als der zuvor erörterten Anordnung anwendbar.

Es gibt nun verschiedene Möglichkeiten, die Lehre der vorliegenden Erfindung in vorteilhafter Weise auszugestalten und weiterzubilden. Dazu ist einerseits auf die nachgeordneten Ansprüche, andererseits auf die nachfolgende Erläuterung von Ausführungsbeispielen der Erfindung anhand der Zeichnungen zu verweisen. In Verbindung mit der Erläuterung der bevorzugten Ausführungsbeispiele der Erfindung anhand der Zeichnung werden auch im allgemeinen bevorzugte Ausgestaltungen und Weiterbildungen der Lehre erläutert. In den Zeichnungen zeigen
Fig. 1 in einer schematischen Seitenansicht, teilweise geschnitten, ein Ausführungsbeispiel einer erfindungsgemäßen Brennkraftmaschine im Detail, nämlich eine Anordnung für die Zündung mit Funkenzündeinrichtung mit besonders langen Elektroden zum Zeitpunkt der Kraftstoffeinspritzung,
Fig. 2 in einer schematischen Seitenansicht, teilweise geschnitten, die Anordnung aus Fig. 1 im oberen Totpunkt des Kolbens unmittelbar nach Einleitung der Zündung,
Fig. 3 in einer schematischen Seitenansicht, teilweise geschnitten, ein weiteres Ausführungsbeispiel einer erfindungsgemäßen Brennkraftmaschine, nämlich eine Anordnung für die Zündung mit einem in der Mulde des Kolbens angeordneten Metallstift, der als Masseelektrode dient,
Fig. 4 in einer schematischen Seitenansicht, teilweise geschnitten, ein weiteres Ausführungsbeispiel einer erfindungsgemäßen Brennkraftmaschine, nämlich eine Anordnung mit zylindrischer Vorkammer-Funkenzündeinrichtung mit Zündung im Zentralbereich der Vorkammer,
Fig. 5 in einem schematischen Querschnitt, entlang der Linie A-A, den Gegenstand aus Fig. 4,
Fig. 6 in einer schematischen Seitenansicht, teilweise geschnitten, ein weiteres Ausführungsbeispiel einer erfindungsgemäßen Brennkraftmaschine, nämlich eine Anordnung mit zylindrischer Wirbelkammer-Funkenzündeinrichtung mit Mehrfachzündung im Wandbereich der Wirbelkammer mit tangential verlaufenden Überströmkanälen,
Fig. 7 in einem schematischen Querschnitt, entlang der Linie A-A, den Gegenstand aus Fig. 6,
Fig. 8 in einer schematischen Seitenansicht, teilweise geschnitten, ein weiteres Ausführungsbeispiel einer erfindungsgemäßen Brennkraftmaschine, nämlich eine Anordnung mit üblicher Zündkerze mit einer zentralen Elektrode und mindestens einer Masseelektrode zum Zeitpunkt der Kraftstoffeinspritzung,
Fig. 9 in einer schematischen Seitenansicht, teilweise geschnitten, den Gegenstand aus Fig. 8 im oberen Totpunkt des Kolbens, in dem ein Ringspalt zwischen Kolbenboden und Zylinderkopf gebildet wird,
Fig. 10 in einer schematischen Seitenansicht, teilweise geschnitten, ein weiteres Ausführungsbeispiel einer erfindungsgemäßen Brennkraftmaschine, nämlich eine Anordnung mit Vorkammer-Funkenzündeinrichtung zum Zeitpunkt der Kraftstoffeinspritzung,
Fig. 11 in einer schematischen Seitenansicht, teilweise geschnitten, den Gegenstand aus Fig. 10 im oberen Totpunkt des Kolbens,
Fig. 12 in einer schematischen Seitenansicht, teilweise geschnitten und vergrößert, eine Detailansicht einer Wirbelkammer-Funkenzündeinrichtung mit mehreren Funkenstrecken im oberen Totpunkt des Kolbens,
Fig. 13 in einem Querschnitt den Gegenstand aus Fig. 12 in der Ebene der tangentialen Überströmkanäle,
Fig. 14 in einer schematischen Seitenansicht, teilweise geschnitten und vergrößert, eine Detailansicht einer weiteren Wirbelkammer-Funkenzündeinrichtung, wobei eine zentrale Verbindungsbohrung zur Wirbelkammer im Bereich der Stirnseite und zusätzlichen Verbindungsbohrungen zwischen der Stirnseite der Wirbelkammer und den tangentialen Überströmkanälen der Wirbelkammer-Funkenzündeinrichtung führen,
Fig. 15 in einem Querschnitt den Gegenstand aus Fig. 14 in der Ebene der tangentialen Überströmkanäle,
Fig. 16 in einer schematischen Seitenansicht, teilweise geschnitten und vergrößert, eine Detailansicht einer Wirbelkammer-Funkenzündeinrichtung, wobei Verbindungsbohrungen von der Stirnseite der Wirbelkammer zu den Überströmkanälen im oberen Totpunkt führen und wobei die tangential austretenden Fackelstrahlen auf die Seitenwand der Kolbenmulde gelenkt sind, und
Fig. 17 in einem schematischen Querschnitt den Gegenstand aus Fig. 16 in der Ebene der tangential in die Wirbelkammer eintretenden Überströmkanäle.

Die Figuren zeigen gemeinsam verschiedene Ausführungsbeispiele einer Brennkraftmaschine mit Kraftstoff-Direkteinspritzung und Fremdzündung, wobei der Brennraum 1 durch einen Zylinderblock 2, einen Zylinderkopf 3 und einen Kolben 4 gebildet ist. In der Kolbenoberfläche 5 ist eine Mulde 6 ausgebildet. Der Kraftstoff ist von einer Einspritzdüse 7 in Richtung der Mulde 6 einspritzbar und über eine Funkenzündeinrichtung 8 zündbar.

Erfindungsgemäß ist die Mulde 6 im Kolben 4 derart positioniert und ausgebildet bzw. dimensioniert, daß die Funkenzündeinrichtung 8 bereits vor Erreichen des Zündzeitpunkts zumindest mit ihrem freien Ende 9 in die Mulde 6 mit geringem Spiel eintaucht und bei Erreichen des oberen Totpunkts des Kolbens 4 mit geringem Spiel in die Mulde 6 eingetaucht ist und dabei die Mulde 6 zumindest weitgehend ausfüllt.

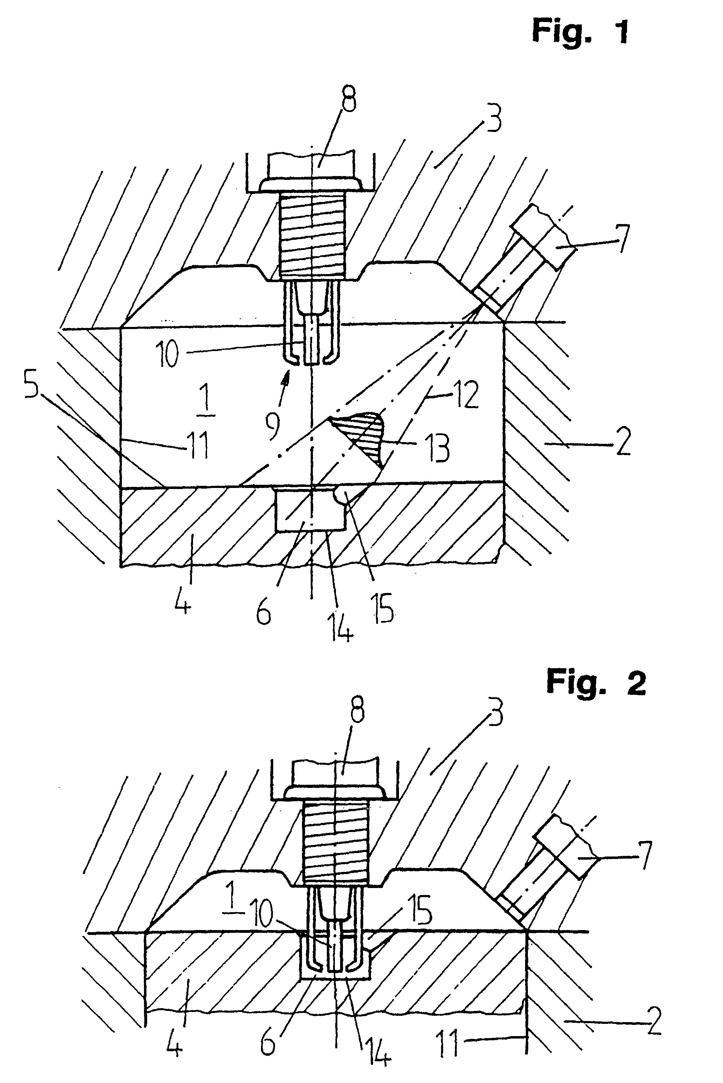

Fig. 1 zeigt eine erfindungsgemäße Brennkraftmaschine ausschnittsweise, nämlich im Bereich des Brennraums 1, und zwar zur Entflammung sehr magerer Kraftstoff-Luft-Gemische, wobei dort eine Funkenzündeinrichtung 8 mit besonders langer Elektrode 10 verwendet wird. Die Elektrode 10 ist im wesentlichen zentral zu dem durch den Zylinderkopf 3, den Kolben 4 und der Zylinderwand 11 gebildeten Brennraum 1der Brennkraftmaschine angeordnet ist. Der Kolben 4 ist in einer Stellung während des Kompressionsvorgangs gezeigt, in der der Kraftstoff von der Einspritzdüse 7 im wesentlichen in Richtung auf die Mulde 6 gespritzt wird. Das kann z.B. je nach Brennverfahren, Ventilanordnung, Kraftstoffstrahlwinkel usw. bei einem Kurbelwinkel des Motors zwischen 40 Grad und 80 Grad KWv OT sein und sich z.B. über 15 Grad KW hinziehen.

Innerhalb der Grenzen des Kraftstoffstrahls 12 ist die Kraftstoffdichteverteilung i.a. annähernd durch eine in Fig. 1 angedeutete Normalverteilung 13 zu beschreiben, wobei besonders große Kraftstofftropfen sich im Kernbereich des Kraftstoffstrahls 12 befinden. In Verbindung mit einer kurzen Einspritzdauer, z.B. 0,5 -1,0 ms, läßt sich sicherstellen, daß bis in den Bereich hoher Drehzahlen hinein der Kolben während des Einspritzvorgangs nur einen kleinen Hub durchläuft, so daß großte Anteile des Kraftstoffs innerhalb der Mulde 6 oder in der unmittelbaren Umgebung der Mulde 6 wandangelagert werden bzw. sich als mit Kraftstoff angereichertes Gemisch in der Mulde 6 befinden oder der Mulde 6 vorgelagert werden.

Während des weiteren Kompressionsvorgangs, d.h. der weiteren Verdichtung des Kraftstoff-Luft-Gemischs im Brennraum 1, erwärmt sich der auf der Kolbenoberfläche 5 in und außerhalb der Mulde 6 wandangelagerte Kraftstoff und verdampft. Zudem kommt es zu einer ausgeprägten Ladungsbewegung aus dem Brennraum 1 heraus in Richtung auf den Muldenboden 14, wodurch die der Mulde 6 vorgelagerten Kraftstoffanteile zum großen Teil ebenfalls in die Mulde 6 transportiert werden.

Um den Anteil des durch die Kraftstoffeinspritzung in die Mulde 6 gelangenden Kraftstoffs zu erhöhen, kann die Mulde 6 am oberen Rand in Einspritzrichtung des Kraftstoffs eine Abschrägung 15 aufweisen.

In Fig. 2 ist die Anordnung nach Fig. 1 im oberen Totpunkt (OT) des Kolbens 4 unmittelbar nach Einleitung der Zündung dargestellt. Als Folge der schnellen Kolbenbewegung in Richtung auf den oberen Totpunkt des Kolbens 4 unmittelbar vor der Zündung kommt es in der Mulde 6 zu einer intensiven Ladungsbewegung, wobei jedoch ein Stoffaustausch mit dem Brennraum 1 weitgehend unterdrückt ist, so daß sich im Bereich der Zündelektrode 10 zum Zündzeitpunkt ein vergleichsweise homogenes und gegenüber der Gemischzusammensetzung im Brennraum 1mit Kraftstoff angereichertes Gemisch gebildet hat.

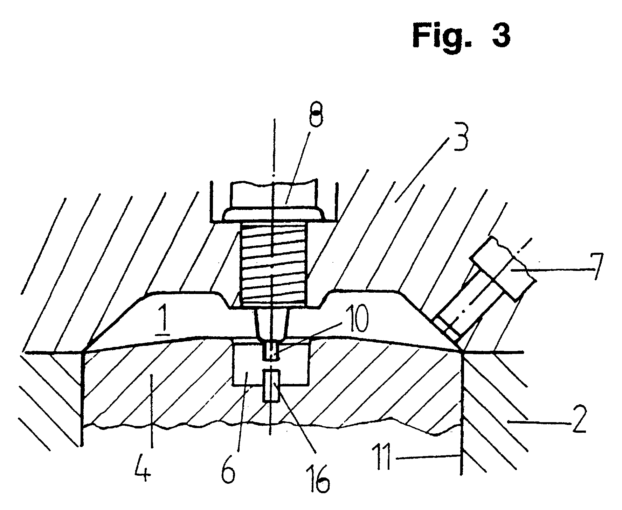

Bei dem in Fig. 3 gezeigten weiteren Ausführungsbeispiel dient ein zentral in der Mulde 6 angeordneter Metallstift 16 als Masseelektrode für die Funkenzündeinrichtung 8. Bei dieser Anordnung ergibt sich eine besonders geringe störende Wirkung der Elektroden 10 auf die Flammenausbreitung. Die in der OT-Stellung des Kolbens 4 gezeigte Anordnung führt entsprechend der Abhängigkeit des Zündwinkels vom Motor-Betriebspunkt zu einem veränderlichen und im Mittel besonders großen Elektrodenabstand. Durch die Wahl einer angepaßten Zündanlage mit hohem Spannungsangebot und geringer Nebenschlußempfindlichkeit werden besonders gute Zündeigenschaften erreicht.

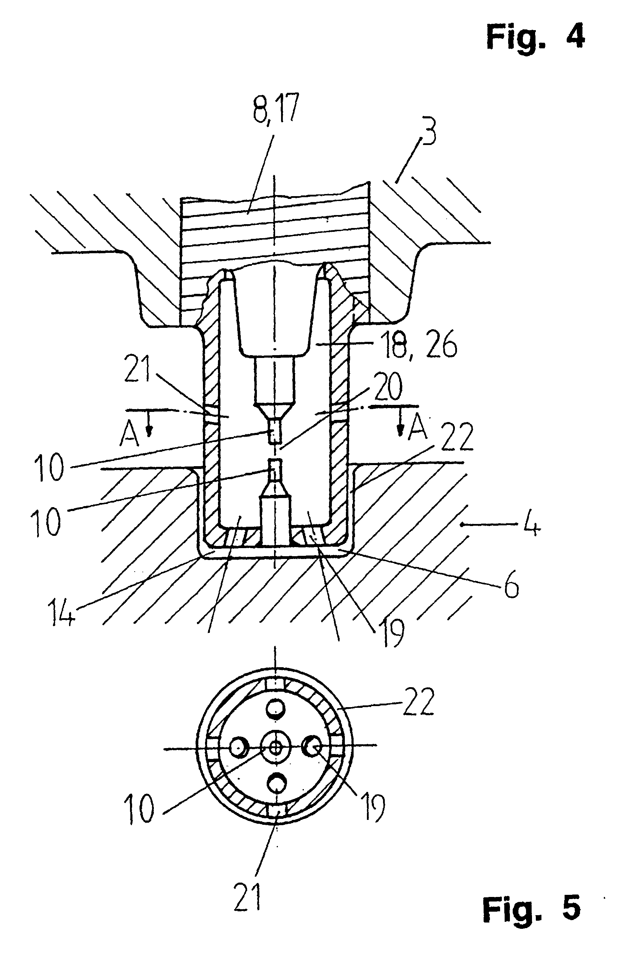

In Fig. 4 ist der Schnitt durch eine besondere Funkenzündeinrichtung 8, nämlich durch eine Vorkammer-Zündkerze 17, mit Zündung im Zentralbereich der Vorkammer 18 in der OT-Stellung des Kolbens 4 dargestellt. Beim Eindringen der zylindrischen Zündkammer bzw. Vorkammer 18 in die Mulde 6 wird das in der Mulde 6 und insbesondere am Muldenboden 14 befindliche, mit Kraftstoff angereicherte Gemisch durch die im Boden befindlichen Überströmkanäle 19 in die Vorkammer 18 hineingedrückt und in den Bereich der Zündstelle 20 gelenkt. Ein evtl. noch an den Wänden der Mulde 6 befindlicher flüssiger Kraftstoffanteil wird durch die große Strömungsgeschwindigkeit zwischen Vorkammer 18 und Mulde 6 entfernt und zerstäubt, wobei dieses Gemisch dann entweder in die Zündkammer bzw. Vorkammer 18 oder seitlich an der Zündkammer 18 vorbeigelenkt wird. Danach erreicht ein Teil des seitlich entweichenden, mit Kraftstoff angereicherten Gemischs über radiale Überströmkanäle 21 die Vorkammer 18.

Zur Verbesserung der Entflammung des Gemischs in der Vorkammer 18 sind die Zündelektroden 10 im vorderen Bereich verjüngt und können dabei z.B. aus Edelmetall bestehen oder als mit Edelmetall beschichtete Elektroden ausgebildet sein.

Nach Einleitung der Zündung werden radial aus der Zündkammer bzw. Vorkammer 18 über die Überströmkanäle 21 austretende Zündfackeln erzeugt, die eine schnelle und gleichmäßige Verbrennung des Gemischs im Brennraum 1 bewirken. Gleichzeitig tritt zunächst unverbranntes und nachfolgend verbranntes, mit Kraftstoff angereichertes Gemisch über die im Bodenbereich der Zündkammer bzw. Vorkammer 18 befindlichen Überströmkanäle 19 aus und preßt zunächst das unverbrannte und später das verbrannte Gemisch durch den Ringspalt 22 zwischen Zündkammer bzw. Vorkammer 18 und Mulde 6. Durch dieses Gemisch und das während des Verdichtungstaktes in der Umgebung der Vorkammer 18 angesammelte, mit Kraftstoff angereicherte Gemisch sowie durch die große Ladungsbewegung ergibt sich in der weiteren Umgebung der Vorkammer 18 eine intensive Verbrennung, die zusätzlich dazu beiträgt, eine sichere und gleichmäßige Entflammung des sehr mageren Kraftstoff-Luft-Gemischs im weiteren Umfeld der Zündkammer bzw. Vorkammer 18 zu erreichen.

Die auf der Stirnseite der Zündkammer bzw. Vorkammer 18 austretenden Verbrennungsgase bewirken auch bei niedrigen Kolbentemperaturen, wie sie z.B. während des Warmlaufs des Motors vorliegen, eine vollständige Verbrennung aller vor Einleitung der Zündung in der Mulde 6 möglicherweise noch befindlichen flüssigen Kraftstoffreste. Gleichzeitig kommt es zu einer schnellen Erwärmung der Mulde 6, so daß sehr frühzeitig nach einem Kaltstart des Motors ein extrem magerer Motorbetrieb möglich ist.

Fig. 5 zeigt einen Querschnitt durch die Anordnung nach Fig. 4 in Höhe der radialen Überströmkanäle 21.

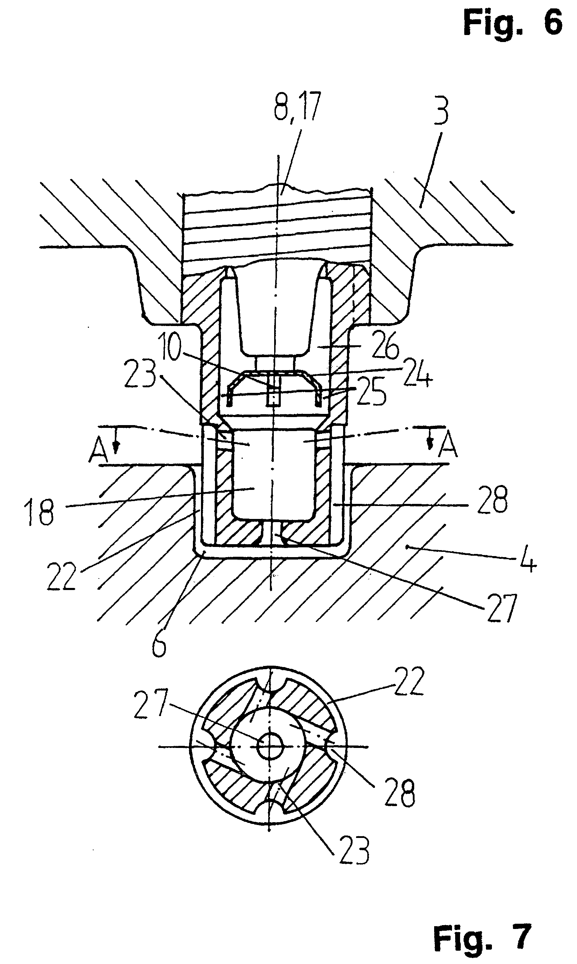

Fig. 6 zeigt ein weiteres Ausführungsbeispiel einer erfindungsgemäßen Brennkraftmaschine, nämlich eine weitere Variante einer Funkenzündeinrichtung 8 in Form einer alternativen Vorkammer-Zündkerze 17. Dabei handelt es sich im Konkreten um eine Wirbelkammer-Funkenzündeinrichtung, mit der durch die Erzeugung einer Drallströmung durch tangential angeordnete Überströmkanäle 23 und Verwendung einer Mehrfach-Mittelelektrodeneinrichtung 24, mit der mehrere Zündfunkenstrecken 25 zur im wesentlichen zylindrischen Innenwandung der Wirbelkammer 26 erzeugt werden, noch besonders magere Gemische sicher entflammt werden können. Damit ist es möglich, größere Schwankungen der Luftzahl an der Zündstelle 20, wie sie z.B. im Zusammenhang mit instationären Fahrzuständen auftreten können, sicher zu beherrschen.

Um nun einerseits eine besonders weitgehende Gemischanreicherung an der Zündstelle 20 und andererseits eine besonders gute Reproduzierbarkeit der Gemischzusammensetzung und Homogenisierung im Bereich des Zündfunkens zu erreichen, wird während des Eintauchens der Zündkammer bzw. Vorkammer 18 in die Mulde 6 zum einen durch eine als mittigen Überströmkanal ausgebildete zentrale Bohrung 27 aus dem Bodenbereich der Mulde 6 mit Kraftstoff angereichertes Gemisch in den zentralen Bereich des Querschnitts im Bereich der Zündelektroden 10 gelenkt. Zum anderen wird über die tangentialen Überströmkanäle 23 ebenfalls mit Kraftstoff angereichertes Gemisch aus dem Boden- und Seitenbereich der Mulde 6 tangential in die Wirbelkammer 26 gelenkt, wobei dieses Gemisch um die Hauptachse der Wirbelkammer 26 rotiert und den zentralen, durch die zentrale Bohrung 27 gebildeten Strahl umgibt. Damit ergibt sich im gesamten Querschnitt der Zündungsebene ein besonders gut mit Kraftstoff angereichertes Gemisch.

Zur besonders guten Anreicherung des über die tangentialen Überströmkanäle 23 strömenden Gemischs mit Kraftstoff sind auf der Außenseite des unteren Bereichs der Wirbelkammer 26 Nuten 28 angeordnet, die das angereicherte Gemisch aus dem Bodenbereich während des Eindringens der Zündkammer bzw. Vorkammer 18 in die Mulde 6 vor die tangentialen Überströmkanäle 23 lenken.

Fig. 7 zeigt einen Querschnitt durch die Anordnung nach 6 in Höhe der tangentialen Überströmkanäle 23, so daß diese dort besonders gut erkennbar sind.

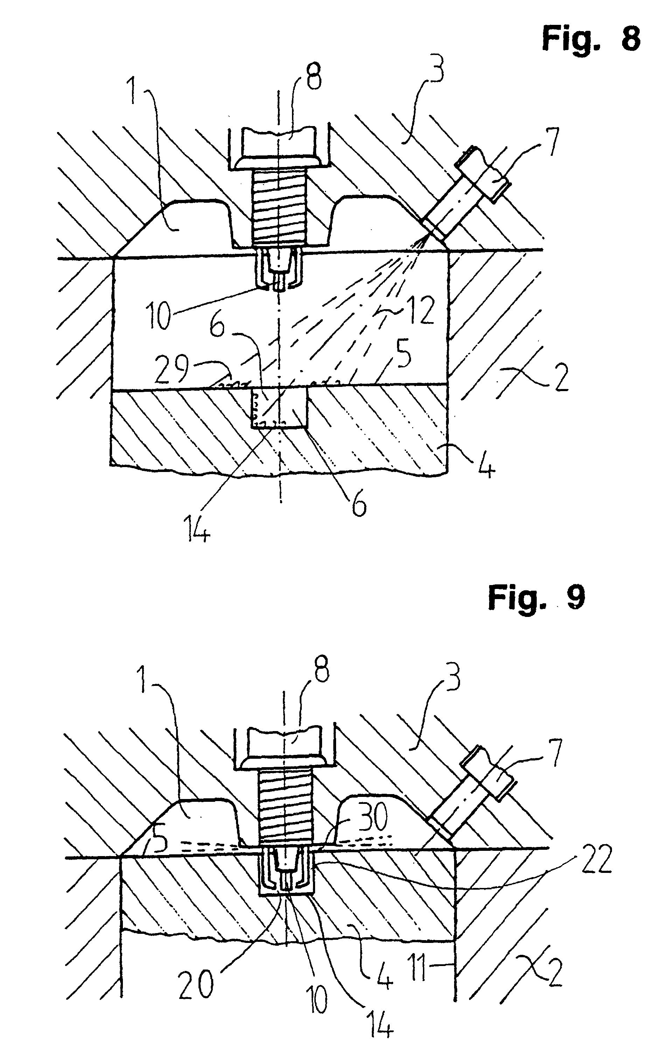

In Fig. 8 ist eine weitere Anordnung zur Zündung und Verbrennung bei einer Brennkraftmaschine mit Kraftstoff-Direkteinspritzung und Fremdzündung dargestellt, bei der - wie in den Fig. 1 bis 3 - die Funkenzündeinrichtung 8 mit üblichen Elektroden 10 zur Zündung des Gemischs im Brennraum 1 verwendet wird. Der Brennraum 1 wird von dem Zylinderkopf 3, dem Zylinderblock 2 und dem Kolben 4 gebildet. Der Kolben 4 ist in einer Stellung während des Kompressionsvorgangs gezeigt, in der der Kraftstoff von der Einspritzdüse 7 in Richtung auf die Mulde 6 gespritzt wird.

Insbesondere bei alleiniger Einspritzung des Kraftstoffs während des Verdichtungstaktes besteht die Gefahr, daß der Kraftstoffstrahl 12 beim Auftreffen auf der Oberfläche der Mulde 6 und dem Muldenboden 14 noch flüssige Kraftstoffanteile enthält, die sich als Kraftstofffilm bzw. feinverteilte Tröpfchen 29 niederschlagen.

Während des weiteren Kompressionsvorgangs, d.h. während der weiteren Verdichtung des Kraftstoff-Luft-Gemischs im Brennraum 1, erwärmt sich der auf der Muldenoberfläche 14 und Kolbenoberfläche 5 wandangelagerte Kraftstoff (Tröpfchen 29) und wird teilweise in das Kraftstoff-Luft-Gemisch oberhalb der Oberflächen 14, 5 eingemischt.

Vor allem bei nicht betriebswarmem Motor besteht die Gefahr, daß auch bei weiterer Verdichtung ein geringer Anteil des Kraftstoffs als Wandniederschlag auf der Muldenoberfläche 14 und/oder auf der Kolbenoberfläche 5 in der engeren Umgebung der Mulde 6 erhalten bleibt.

In Fig. 9 ist die Anordnung nach Fig.1 im OT des Kolbens 4 unmittelbar nach Einleitung der Zündung gezeigt. Als Folge der schnellen Kolbenbewegung in Richtung auf OT des Kolbens 4, kommt es in der Mulde 6 und in deren Umgebung zu einer intensiven Ladungsbewegung, wodurch sich am Zündort 20 eine besonders gleichmäßige Zusammensetzung des Kraftstoff-Luft-Gemischs bei besonders zündfähiger Zusammensetzung ergibt. Insbesondere wird bei Annäherung an den OT vom Kolben 4 und Zylinderkopf 3 aus der Mulde 6 eine Art Vorkammer erzeugt, die über einen kreisringförmigen Überströmkanal 30 in radialer Richtung mit dem Brennraum 1 verbunden ist. Als Folge der Verbrennung und der mit hoher Geschwindigkeit kolbennah über dem kreisringförmigen Überströmkanal 30 austretenden heißen Gase wird sichergestellt, daß ein flüssiger Kraftstoff auf der Muldenoberfläche 14 und der Kolbenoberfläche 5 sicher abgebaut wird und eine frühe wirkungsgradoptimale und schadstoffarme Verbrennung des gesamten im Brennraum 1 vorhandenen Kraftstoffs erreicht wird.

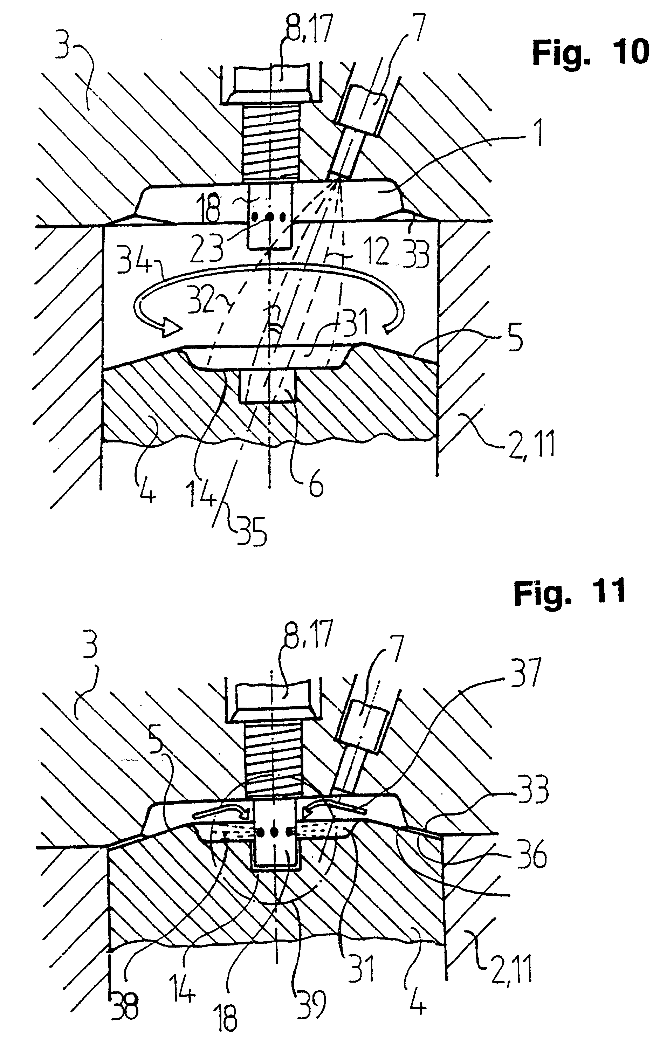

In Fig. 10 ist eine weitere Anordnung dargestellt, bei der eine Vorkammer-Zündkerze 17 verwendet wird, bei der im wesentlichen im mittleren Bereich des in den Brennraum 1 hineinragenden zylindrischen Teils der Vorkammer 18 Überströmkanäle 23 ausgebildet sind, die radial oder tangential in die Vorkammer 18 einmünden. Nach der Zündung werden von diesen Fackelstrahlen erzeugt, die im wesentlichen vom Zentrum des Brennraums 1 radial in Richtung auf die Zylinderwandung gerichtet sind.

Der Kolben 4 ist in einer Stellung während des Kompressionsvorgangs gezeigt, in der Kraftstoff von der Einspritzdüse 7 im wesentlichen in Richtung auf die Mulde 6 gespritzt wird.

Die vergleichsweise kleine Mulde 6 ist von einer weiteren größeren Mulde bzw. von einem erweiterten Bereich 31 umgeben, der im wesentlichen symmetrisch um die Mulde 6 herum ausgebildet ist. Der durch die Einspritzdüse 7 erzeugte Kraftstoffstrahl 12 ist so ausgebildet, daß er im wesentlichen zentral auf beide Mulden 6, 31 gerichtet ist und der äußere Strahlrand 32 nicht über den Rand des erweiterten Bereichs 31 der Mulde 6 hinausgeht.

Der Kolbenboden bzw. die Kolbenoberfläche 5 ist außerhalb der Mulde 6 leicht schräg in Richtung auf den Zylinderkopf 3 ausgebildet, um mit einem äußeren, ebenfalls schräg ausgebildeten Teil 33 des Zylinderkopfs 3 eine im wesentlichen parallel ausgebildete Quetschfläche zu erzeugen, die im Brennraum 1 bei Annäherung an den OT wirksam wird.

Weiterhin ist in Fig.10 durch einen Pfeil 34 eine Drallströmung angedeutet, die vor allem bei später Einspritzung des Kraftstoffs nötig wird, um eine stabile Ladungsschichtung im Brennraum 1 und eine schnelle Energieumsetzung zu erreichen.

Im Hinblick auf eine stabile und gleichmäßige Ladungsschichtung und Verbrennung ist es auch Vorteilhaft, wenn die Einspritzdüse 7 möglichst zentral angeordnet ist und die Einspritzstrahlachse 35 einen besonders kleinen Winkel zur Hauptachse des Brennraums 1 aufweist. Mit anderen Worten wird der Kraftstoffstrahl 12 möglichst steil auf den zentralen Bereich der Kolbenoberfläche 5 gerichtet. Das erfordert eine enge Nachbarschaft der Funkenzündeinrichtung 8 zur Einspritzdüse 7.

Um jedoch bei früher Einspritzung ein möglichst homogenes Kraftstoff-Luft-Gemisch zu erzeugen, ist ein größerer Kraftstoff-Ausbreitungswinkel sinnvoll. Dadurch gelangt ein Teil des Kraftstoffs auf die Vorkammer-Zündkerze 17, wodurch sich eine Kühlung und ein Transport von Kraftstoff während des Verdichtungsvorgangs in die Vorkammer 18 hinein ergibt. Beide Eigenschaften sind non enormem Vorteil.

Fig. 11 zeigt die Anordnung aus Fig. 10 in der OT-Stellung des Kolbens 4. Hierbei wird beim Eindringen der zylindrischen Zündkammer 18 in die Mulde 6 das in der Mulde 6 und insbesondere im Bereich des Muldenbodens 14 befindliche, mit Kraftstoff angereicherte Gemisch durch am bzw. im Muldenboden 14 oder auf der Außenseite der Vorkammer 18 befindliche Bohrungen Überströmkanäle 23 bzw. Aussparungen in die Vorkammer 18 hinein gedrückt. Zusätzlich wird bei Annäherung an OT zunehmend "fettes" Kraftstoff-Luft-Gemisch aus dem Bereich oberhalb der Mulde 6 bzw. des erweiterten Bereichs 31 der Mulde 6 über die Überströmkanäle 21, 23 in die Vorkammer 18 hinein gedrückt und in den Bereich der Zündstelle 20 gelenkt. Ein evtl. noch an den Wänden der Mulde 6 befindlicher flüssiger Kraftstoffanteil wird durch die große Strömungsgeschwindigkeit zwischen Vorkammer 18 und Mulde 6 entfernt und zerstäubt, wobei auch dieses Gemisch dann entweder in die Zündkammer bzw. Vorkammer 18 oder seitlich an der Zündkammer bzw. Vorkammer 18 vorbei gelenkt wird.

Bei Annäherung an OT entsteht zwischen den äußeren schrägen Flächen des Kolbens 4 (der Kolbenoberfläche 5) und den entsprechend abgeschrägten Flächen bzw. dem entsprechend abgeschrägten Teil 33 des Zylinderkopfes 3 ein Quetschspalt 36. Die dadurch entstehende Quetschströmung 37 erzeugt im oberen Bereich des Brennraums 1 eine zum Zentrum des Brennraums 1 gerichtete Strömung, die entweder Luft oder sehr mageres Kraftstoff-Luft-Gemisch vom äußeren Rand des Brennraums 1 in den Bereich der Einspritzstrahlachse 35 transportiert. Dieser Strömung 36 ist gemäß Darstellung in Fig. 10 eine Drallströmung überlagert und der ringförmigen Strömung entgegengerichtet, die durch das Eintauchen der Vorkammer-Zündkerze 17 in die Mulde 6 erzeugt wird.

Nach Einleitung der Zündung kommt es zur Ausbildung einer Vielzahl von Fackelstrahlen 38, die eine kolbenbodennahe Strömung heißer Brenngase bewirken.

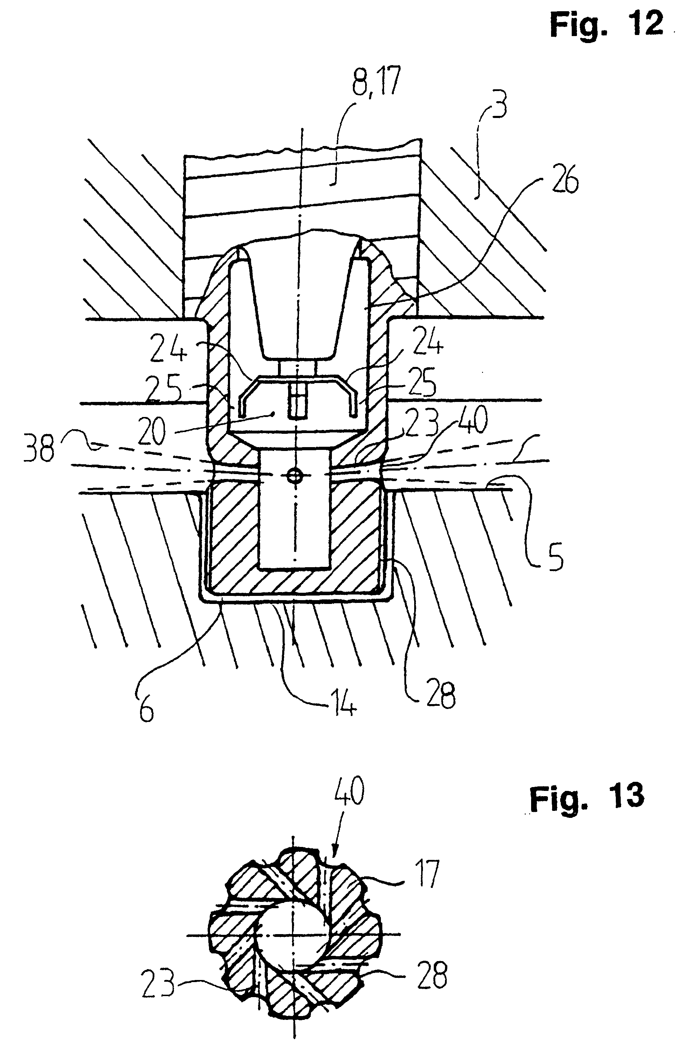

Fig. 12 zeigt in einer vergrößerten Darstellung einen Längsschnitt durch eine Vorkammer-Zündkerze 17 im durch einen Kreis 39 in Fig. 11 markierten Bereich. Der Schnitt zeigt eine als Wirbelkammer-Funkenzündeinrichtung ausgebildete Anordnung, mit Erzeugung einer Drallströmung durch tangential angeordnete Überströmkanäle 23 und Verwendung einer für sich bekannten Mehrfach-Mittelelektrode 24 mit mehreren Zündfunkenstrecken 25 zur im wesentlichen zylindrischen Innenwandung der Wirbelkammer 26.

Um einerseits eine gewünschte Gemischanreicherung an der Zündstelle 20 und andererseits eine besonders gute Reproduzierbarkeit der Gemischzusammensetzung und Homogenisierung im Bereich des Zündfunkens zu erreichen, sind die Überströmkanäle 23 im vorderen Bereich als Diffusor 40 ausgebildet. Die sich nach außen aufweitende Form des Diffusors 40 bewirkt gleichzeitig, daß beim Austritt der verbrannten heißen Gase aus der Wirbelkammer 26 eine schnelle Auffächerung der Fackelstrahlen 38 und damit eine frühzeitige Annäherung der heißen Gase an den Kolbenboden 5 außerhalb der Mulde 6 erreicht wird.

Die Neigung der Überströmkanäle 23 gegenüber dem Kolbenboden 5 wird vorteilhafterweise so gewählt, daß sich einerseits eine gute Abdampfung des Kraftstoffs und andererseits ein nicht zu großer Wärmeübergang an den Kolbenboden 5 ergibt.

Um das über die tangential angeordneten Überströmkanäle 23 strömende Gemisch mit einem hohen Kraftstoffanteil zu versehen, sind auf der Außenseite des unteren Bereichs der Wirbelkammer 26 Nuten 28 angeordnet, die Kraftstoff bzw. mit Kraftstoff angereichertes Gemisch aus dem Bodenbereich der Mulde 6 während des Eindringens der Wirbelkammer-Zündkerze bzw. -Funkenzündeinrichtung in die Mulde 6 vor die Überströmkanäle 23 lenken.

Fig. 13 zeigt im einen Querschnitt durch die Anordnung aus Fig.12, und zwar in Höhe der tangentialen Überströmkanäle 23.

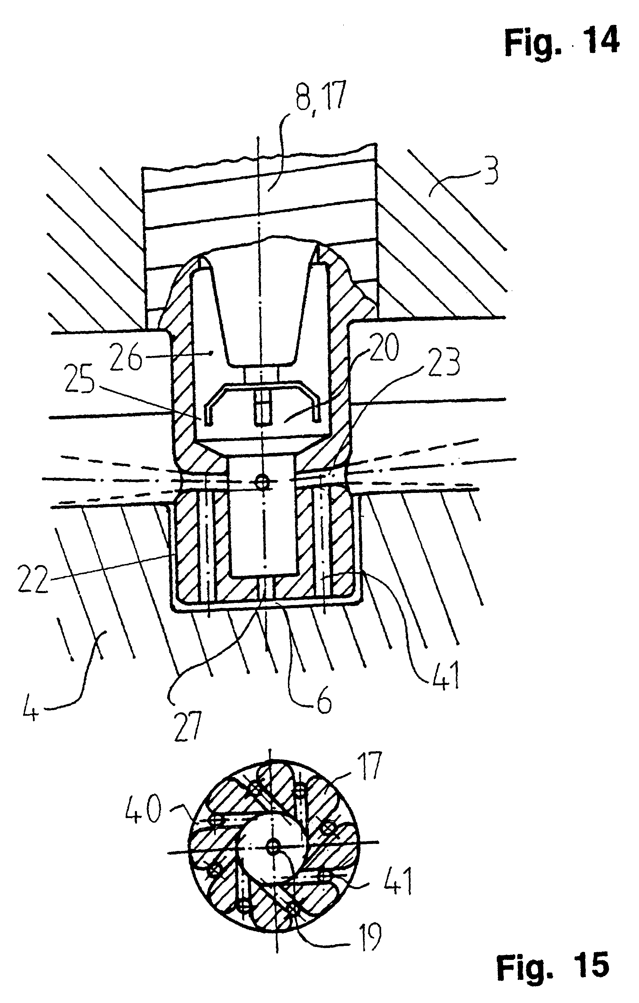

Fig. 14 zeigt eine weitere Variante einer Wirbelkammer-Funkenzündeinrichtung mit mehreren Zündfunkenstrecken 25, und zwar in der OT-Stellung des Kolbens 4, mit als Verbindungsbohrungen ausgeführten weiteren vertikalen Überströmkanälen 41 zwischen der Stirnseite der Wirbelkammer-Funkenzündeinrichtung bzw. der Vorkammer-Zündkerze 17 und den Überströmkanälen 23. Dabei wird während des Füllvorgangs der Wirbelkammer 26 mit Kraftstoff angereichertes Gemisch aus dem Bodenbereich der Mulde 6 durch Strahlpumpenwirkung angesaugt, wobei der Strahlpumpeneffekt im Bereich der Verbindung der Überströmkanäle 23 und der Verbindungsbohrungen entsteht. Durch den gleichen Effekt wird beim Ausströmen der heißen Gase über die Überströmkanäle 23 ein Eindringen dieser Gase in den Bodenbereich der Mulde 6 unterdrückt bzw. vermindert. Durch diese Maßnahme wird insgesamt die thermische Belastung des Muldenbodens 14 der Mulde 6 vermindert.

Bei der voranstehend erläuterten Variante, aber auch bei anderen Varianten, kann zusätzlich eine kleine zentrale Bohrung 27- als weiterer Überströmkanal - zur Füllung des zentralen vorderen Bereichs der Wirbelkammer 26 verwendet werden. Durch diesen Überströmkanal 27 wird gleichzeitig sichergestellt, daß nach der Zündung und dem Austritt heißer Brenngase kein flüssiger Kraftstoff im Bodenbereich der Mulde 6 verbleibt.

Fig. 15 zeigt einen Querschnitt durch die Anordnung aus Fig. 14, und zwar in Höhe der tangentialen Überströmkanäle 23.

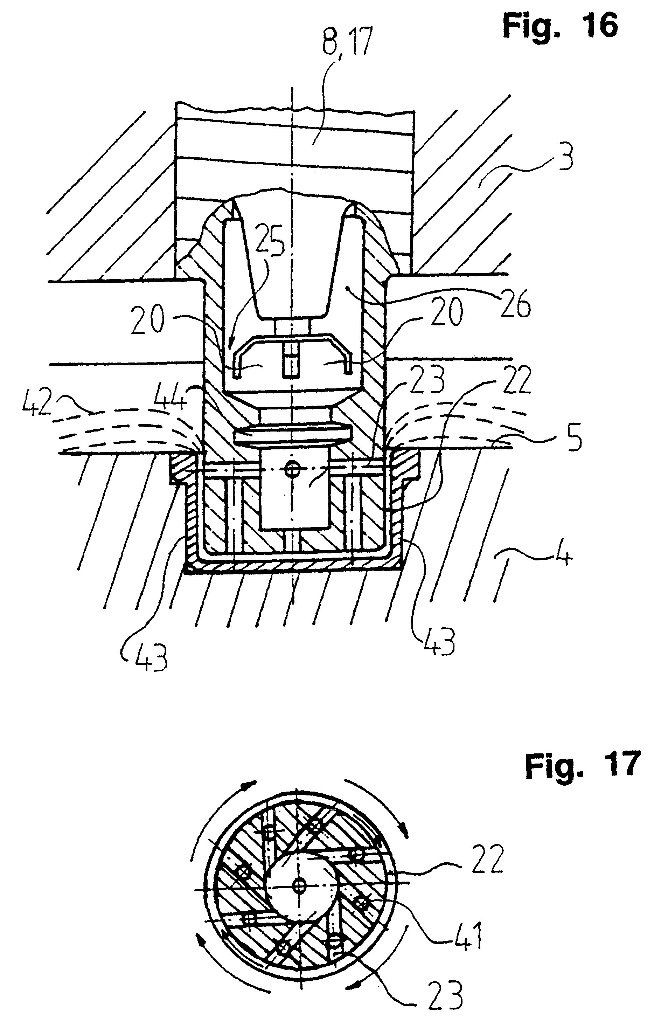

Fig. 16 zeigt ebenfalls in einer schematischen Darstellung, vergrößert, eine weitere Variante einer Wirbelkammer-Funkenzündeinrichtung, bei der während des Eintauchens der Vorkammer 18 bzw. des vorderen Bereichs der Wirbelkammer 26 die über die tangentialen Überströmkanäte 23 austretenden heißen Brenngase auf die Seitenwand der Mulde 6 treffen und im Ringspalt 22 zwischen der Außenwandung der Wirbelkammer 26 und der Innenwandung der Mulde 6 eine Drallströmung erzeugen, die nach dem Austritt der heißen Gase aus dem Ringspalt 22 eine sich an die Kolbenoberfläche 5 anlegende Drallströmung 42 aus heißen Brenngasen bewirken.

Um die thermische Belastung des Kolbens 4 sicher zu beherrschen, ist die Mulde 6 mit einer Hülse 43 aus hochwarmfestem Material ausgekleidet. Eine solche Auskleidung der Mulde 6 kann selbstverständlich auch bei einer anderen als der hier gezeigten Anordnung Anwendung finden.

Zur Vermeidung, daß flüssiger Kraftstoff über die Überströmkanäle 23 unmittelbar zur Zündstelle gelangt, ist zwischen den tangentialen Einmündungen der Überströmkanäle 23 in die Wirbelkammer 26 und zu den Zündstellen 20 eine Auffangeinrichtung 44 für flüssige Kraftstoffanteile ausgebildet, die bei dem hier gewählten Ausführungsbeispiel als radial nach außen gerichtete, ringförmige Nut ausgebildet ist.

Schließlich zeigt Fig. 17 einen Querschnitt durch die Anordnung aus Fig. 16, und zwar wiederum in Höhe der tangentialen Überströmkanäle 23.

Abschließend sei ganz besonders darauf hingewiesen, daß die voranstehend aufgeführten Ausführungsbeispiele der beispielhaften Erörterung der erfindungsgemäßen Lehre dienen, diese jedoch nicht auf die Ausführungsbeispiele einschränken.

## Patentansprüche

1. Brennkraftmaschine mit Kraftstoff-Direkteinspritzung und Fremdzündung, wobei der Brennraum (1) durch einen Zylinderblock (2), einen Zylinderkopf (3) und einen Kolben (4) gebildet, in der Kolbenoberfläche (5) eine Mulde (6) ausgebildet und der Kraftstoff von einer Einspritzdüse (7) in Richtung der Mulde (6) einspritzbar und über eine Funkenzündeinrichtung (8) zündbar ist, und wobei die Mulde (6) im Kolben (4) derart positioniert und ausgebildet bzw. dimensioniert ist, daß die Funkenzündeinrichtung (8) oder ein Träger der Funkenzündeinrichtung (8) bereits vor Erreichen des Zündzeitpunkts zumindest mit ihrem freien Ende in die Mulde (6) mit geringem Spiel eintaucht und bei Erreichen des oberen Totpunkts des Kolbens (4) mit geringem Spiel in die Mulde (6) eingetaucht ist und dabei die Mulde (6) zumindest weitgehend ausfüllt,
**dadurch gekennzeichnet, daß** die Funkenzündeinrichtung (8) oder der Träger der Funkenzündeinrichtung (8) und die Einspritzdüse (7) als voneinander unabhängige Bauteile ortsfest dem Zylinderblock (2) zugeordnet sind und daß die Einspritzdüse (7) derart angeordnet und ausgerichtet ist, dass die Einspritzstrahlachse (35) zu der Kolbenachse abgewinkelt ist.

2. Brennkraftmaschine nach Anspruch 1, **dadurch gekennzeichnet, daß** die Mulde (6) im wesentlichen mittig im Kolben (4) ausgebildet ist.

3. Brennkraftmaschine nach Anspruch 1 oder 2, **dadurch gekennzeichnet, daß** die Mulde (6) und das freie Ende der Funkenzündeinrichtung (8) oder des Trägers der Funkenzündeinrichtung (8) in ihrer Form im wesentlichen aneinander angepaßt und im Längsschnitt rund, oval oder im wesentlichen zylindrisch ausgebildet sind.

4. Brennkraftmaschine nach einem der Ansprüche 1 bis 3, **dadurch gekennzeichnet, daß** die Mulde (6) zumindest mit einem definierten Abstand zum Muldenboden (14) allseitig geschlossen ist, wobei die Muldenwandung 14 (zur Kolbenoberfläche (5) hin - allseitig, bereichsweise oder zumindest an einer Stelle, vorzugsweise in Einspritzrichtung, - zumindest geringfügig abgeschrägt sein kann.

5. Brennkraftmaschine nach einem der Ansprüche 1 bis 4, **dadurch gekennzeichnet, daß** die Muldenwandung (14) zur Kolbenoberfläche (5) hin gestuft ist, wobei die Mulde (6) über einen gegenüber dem Muldendurchmesser erweiterten Muldenbereich (31) zur Kolbenoberfläche (5) hin öffnet und wobei der erweiterte Muldenbereich (31) konzentrisch um die Mulde (6) herum ausgebildet ist.

6. Brennkraftmaschine nach einem der Ansprüche 1 bis 5, **dadurch gekennzeichnet, daß** bei Annäherung an den oberen Totpunkt des Kolbens (4) zwischen der Funkenzündeinrichtung (8) und dem Randbereich der Mulde (6) ein im wesentlichen ringförmiger bzw. ringscheibenförmiger Überströmkanal (30) entsteht und daß bei Annäherung an den oberen Totpunkt des Kolbens (4) zwischen dem Kolben (4) und einem die Funkenzündeinrichtung (8) umgebenden Teil des Zylinderkopfes (3) ein vorzugsweise ringförmiger bzw. ringscheibenförmiger Überströmkanal (30) entsteht.

7. Brennkraftmaschine nach einem der Ansprüche 1 bis 6, **dadurch gekennzeichnet, daß** als Funkenzündeinrichtung (8) eine herkömmliche Zündkerze dient, wobei die von der oder den Elektroden (10) gebildete Zündstelle (20) nahezu vollständig in die Mulde (6) eintauchen kann.

8. Brennkraftmaschine nach einem der Ansprüche 1 bis 7, **dadurch gekennzeichnet, daß** die Funkenzündeinrichtung (8) im Bereich ihres freien Endes (9) als zumindest ganz überwiegend geschlossene Einheit ausgebildet ist, wobei als Funkenzündeinrichtung (8) eine Vorkammer-Zündkerze (17) dienen kann, wobei die Vorkammer-Zündkerze (17) vorzugsweise eine Mehrfach-Mittelelektrode (24) mit mehreren Zündfunkenstrecken (25) umfaßt, wobei in der Vorkammer (18) zwei einander gegenüberliegende Zündelektroden (10) angeordnet sein können und wobei die Zündelektrode (10) bzw. Zündelektroden am freien Ende verjüngt sind.

9. Brennkraftmaschine nach Anspruch 8, **dadurch gekennzeichnet, daß** die die Zündstelle (20) umfassende Vorkammer (18) zumindest teilweise in die Mulde (6) eintaucht, wobei die Vorkammer (18) mit Spiel der Mulde (6) bzw. der Muldenwandung (14) angepaßt, die Vorkammer (18) im wesentlichen zylindrisch ausgebildet ist und einen im wesentlichen zylindrischen Inneraum aufweist.

10. Brennkraftmaschine nach Anspruch 8 oder 9, **dadurch gekennzeichnet, daß** vorzugsweise im mittleren Bereich des in den Brennraum (1) hineinragenden Teils der Vorkammer-Zündkerze (17) radial und/oder tangential aus der Vorkammer (18) in den Brennraum (1) führende Überströmkanäle (19) ausgebildet sind, wobei im freien Ende des in den Brennraum (1) hineinragenden Teils der Vorkammer-Zündkerze (17) ein sich etwa mittig in die Vorkammer (18) erstreckender Überströmkanal (27) ausgebildet ist und vorzugsweise mehrere mit den übrigen Überströmkanälen (21, 23) und/oder unmittelbar mit der Vorkammer (18) verbundene Überströmkanäle (21, 23) ausgebildet sind.

11. Brennkraftmaschine nach Anspruch 10, **dadurch gekennzeichnet, daß** bei in die Mulde (6) eingetauchter Vorkammer-Zündkerze (17) zumindest ein sich in die Vorkammer (18) erstreckender Überströmkanal (23) in den oberen Randbereich der Mulde (6) mündet.

12. Brennkraftmaschine nach Anspruch 10 oder 11, **dadurch gekennzeichnet, daß** bei in die Mulde (6) eingetauchter Vorkammer-Zündkerze (17) zumindest ein sich in die Vorkammer (18) erstreckender Überströmkanal (23) außerhalb der Mulde (6) mündet.

13. Brennkraftmaschine nach einem-der Ansprüche 10 bis 12, **dadurch gekennzeichnet, daß** in der Außenwandung des in die Mulde (6) eintauchenden Bereichs der Vorkammer-Zündkerze (17) sich vom freien Ende in den Bereich der Überströmkanäle (23) erstreckende Nuten (28) ausgebildet sind.

14. Brennkraftmaschine nach einem der Ansprüche 1 bis 13, **dadurch gekennzeichnet, daß** die Einspritzdüse (7) derart angeordnet und ausgerichtet ist, daß sich im Verlauf der Kolbenbewegung zumindest kuzzeitig eine in die Mulde (6) gerichtete Einspritzstrahlachse (35) ergibt.

15. Brennkraftmaschine nach einem der Ansprüche 1 bis 14, **dadurch gekennzeichnet, daß** die Einspritzdüse derart angeordnet und ausgerichtet ist, daß im Verlauf der Kolbenbewegung sich zumindest kuzzeitig die Projektion des Einspritzstrahlkegels auf den Kolben (4) und die Mulde (6) zumindest teilweise überdecken.

16. Brennkraftmaschine nach einem der Ansprüche 1 bis 15, **dadurch gekennzeichnet, daß** Funkenzündeinrichtung (8) und die Einspritzudüse (7) eine bauliche Einheit bilden, wobei die Einspritzdüse (7) integraler Bestandteil einer Elektrode, vorzugsweise der Mittelelektrode, ist.

17. Brennkraftmaschine nach einem der Ansprüche 1 bis 16, **dadurch gekennzeichnet, daß** die Mulde (6) mit einem hochwarmfesten Material, vorzugsweise in Form einer eingepaßten Hülse, ausgekleidet ist.

## Claims

1. Internal combustion engine having direct fuel injection and externally supplied ignition, the combustion chamber (1) being formed by a cylinder block (2), a cylinder head (3) and a piston (4), a cavity (6) being formed in the piston surface (5) and the fuel being injectable by an injection nozzle (7) in the direction towards the cavity (6) and being ignitable by means of a spark ignition device (8), and the cavity (6) in the piston (4) being so positioned and constructed or dimensioned that the spark ignition device (8) or a carrier of the spark ignition device (8) dips with a small degree of play at least with its free end into the cavity (6) even before reaching the ignition point and, on reaching the top dead centre of the piston (4), is dipped with a small degree of play into the cavity (6) and, at the same time, fills the cavity (6) at least substantially, **characterised in that** the spark ignition device (8) or the carrier of the spark ignition device (8) and the injection nozzle (7) are associated with the cylinder block (2) in a stationary manner in the form of mutually independent components, and **in that** the injection nozzle (7) is so arranged and oriented that the injection jet axis (35) is angled relative to the piston axis.

2. Internal combustion engine according to claim 1, **characterised in that** the cavity (6) is formed substantially centrally in the piston (4).

3. Internal combustion engine according to claim 1 or 2, **characterised in that** the cavity (6) and the free end of the spark ignition device (8) or of the carrier of the spark ignition device (8) are substantially matched to one another in terms of their shape and, in longitudinal section, are round, oval or substantially cylindrical.

4. Internal combustion engine according to any one of claims 1 to 3, **characterised in that** the cavity (6) is closed on all sides at least with a defined spacing from the cavity base (14), it being possible for the cavity wall (14) to be at least slightly inclined towards the piston surface (5) - on all sides, in regions or at least at one site, preferably in the direction of injection.

5. Internal combustion engine according to any one of claims 1 to 4, **characterised in that** the cavity wall (14) is stepped towards the piston surface (5), the cavity (6) opening towards the piston surface (5) by way of a cavity region (31) which is widened relative to the cavity diameter, and the widened cavity region (31) being formed concentrically around the cavity (6).

6. Internal combustion engine according to any one of claims 1 to 5, **characterised in that**, on approaching the top dead centre of the piston (4), a substantially annular or annular-disc-shaped overflow channel (30) is formed between the spark ignition device (8) and the edge region of the cavity (6), and **in that**, on approaching the top dead centre of the piston (4), a preferably annular or ring-target-shaped overflow channel (30) is formed between the piston (4) and a portion of the cylinder head (3) that surrounds the spark ignition device (8).

7. Internal combustion engine according to any one of claims 1 to 6, **characterised in that** a conventional spark plug is used as the spark ignition device (8), the ignition site (20) formed by the electrode(s) (10) being able to dip almost completely into the cavity (6).

8. Internal combustion engine according to any one of claims 1 to 7, **characterised in that** the spark ignition device (8) is in the form of an at least very substantially closed unit in the region of its free end (9), it being possible to use a pre-chamber spark plug (17) as the spark ignition device (8), the pre-chamber spark plug (17) preferably comprising a central polyelectrode (24) with several spark gaps (25), it being possible for two mutually opposite ignition electrodes (10) to be arranged in the pre-chamber (18) and the ignition electrode(s) (10) being tapered at the free end.

9. Internal combustion engine according to claim 8, **characterised in that** the pre-chamber (18) comprising the ignition site (20) dips at least partially into the cavity (6), the pre-chamber (18) fitting, with play, into the cavity (6) or into the cavity wall (14), the pre-chamber (18) being substantially cylindrical and having a substantially cylindrical inner space.

10. Internal combustion engine according to claim 8 or 9, **characterised in that** overflow channels (19) leading radially and/or tangentially out of the pre-chamber (18) and into the combustion chamber (1) are formed preferably in the central region of the portion of the pre-chamber spark plug (17) that projects into the combustion chamber (1), an overflow channel (27) which extends approximately centrally into the pre-chamber (18) being formed in the free end of the portion of the pre-chamber spark plug (17) that projects into the combustion chamber (1), and preferably several overflow channels (21, 23) which are connected to the other overflow channels (21, 23) and/or directly to the pre-chamber (18) being formed.

11. Internal combustion engine according to claim 10, **characterised in that**, when the pre-chamber spark plug (17) is dipped into the cavity (6), at least one overflow channel (23) extending into the pre-chamber (18) opens out in the upper edge region of the cavity (6).

12. Internal combustion engine according to claim 10 or 11, **characterised in that**, when the pre-chamber spark plug (17) is dipped into the cavity (6), at least one overflow channel (23) extending into the pre-chamber (18) opens out outside the cavity (6).

13. Internal combustion engine according to any one of claims 10 to 12, **characterised in that** grooves (28) extending from the free end into the region of the overflow channels (23) are formed in the outer wall of the region of the pre-chamber spark plug (17) that dips into the cavity (6).

14. Internal combustion engine according to any one of claims 1 to 13, **characterised in that** the injection nozzle (7) is so arranged and oriented that an injection jet axis (35) directed into the cavity (6) results at least briefly in the course of the piston movement.

15. Internal combustion engine according to any one of claims 1 to 14, **characterised in that** the injection nozzle is so arranged and oriented that in the course of the piston movement, at least briefly, the projection of the injection jet cone onto the piston (4) and the cavity (6) overlap at least partially.

16. Internal combustion engine according to any one of claims 1 to 15, **characterised in that** the spark ignition device (8) and the injection nozzle (7) form a structural unit, the injection nozzle (7) being an integral part of an electrode, preferably the central electrode.

17. Internal combustion engine according to any one of claims 1 to 16, **characterised in that** the cavity (6) is lined with a highly heat-resistant material, preferably in the form of a fitted sleeve.

## Revendications

1. Moteur à combustion interne avec injection directe de carburant et allumage commandé, la chambre de combustion (1) étant formée par un bloc-cylindres (2), une tête de cylindre (3) et un piston (4), une cavité (6) étant formée dans la surface supérieure (5) du piston et le combustible pouvant être injecté par un injecteur (7) en direction de la cavité (6) et pouvant être allumé par un dispositif d'allumage commandé (8) et la cavité (6) étant positionnée dans le piston (4) et conformée ou respectivement dimensionnée de telle manière que le dispositif d'allumage commandé (8) ou un support du dispositif d'allumage commandé (8) plonge à faible jeu au moins par son extrémité libre dans la cavité (6) déjà avant l'instant d'allumage et étant plongé à faible jeu dans la cavité (6) lors de l'arrivée au point mort haut du piston (4) et remplissant de ce fait au moins largement la cavité (6),
**caractérisé par le fait que** le dispositif d'allumage commandé (8) ou le support du dispositif d'allumage commandé (8) et l'injecteur (7) sont adjoints au bloc-cylindres en position fixe sous forme de composants indépendants l'un de l'autre et que l'injecteur (7) est disposé et orienté de telle manière que l'axe du jet d'injection (35) fait un angle par rapport à l'axe du piston.

2. Moteur à combustion interne selon la revendication 1,
**caractérisé en ce que** la cavité (6) est formée sensiblement centralement dans le piston (4).

3. Moteur à combustion interne selon la revendication 1 ou 2,
**caractérisé en ce que** la cavité (6) et l'extrémité libre du dispositif d'allumage commandé (8) ou du support du dispositif d'allumage commandé (8) sont conformées sensiblement adaptées l'une à l'autre pour leur forme et, en coupe longitudinale, rondes, ovales ou sensiblement cylindriques.

4. Moteur à combustion interne selon l'une des revendications 1 à 3,
**caractérisé en ce que** la cavité (6) est fermée de tous côtés au moins avec un écartement défini par rapport au fond (14) de la cavité, la paroi (14) de la cavité pouvant (en direction de la surface (5) du piston) - de tous côtés, par zones ou au moins à un endroit, de préférence en direction d'injection - être au moins légèrement chanfreinée.

5. Moteur à combustion interne selon l'une des revendications 1 à 4,
**caractérisé en ce que** la paroi (14) de la cavité est étagée en direction de la surface (5) du piston, la cavité (6) s'ouvrant, par une zone (31) élargie de la cavité par rapport au diamètre de la cavité, en direction de la surface (5) du piston et la zone (31) élargie de la cavité étant formée concentriquement tout autour de la cavité (6).

6. Moteur à combustion interne selon l'une des revendications 1 à 5,
**caractérisé en ce qu'**un canal de débordement (30) sensiblement de forme annulaire ou respectivement en forme de disque annulaire se produit, lors de l'approche du point mort haut du piston (4), entre le dispositif d'allumage commandé (8) et la zone de bord de la cavité (6) et qu'un canal de débordement (30) de préférence sensiblement de forme annulaire ou respectivement en forme de disque annulaire se produit, lors de l'arrivée au point mort haut du piston (4), entre le piston (4) et une partie de la tête de cylindre (3) entourant le dispositif d'allumage commandé (8).

7. Moteur à combustion interne selon l'une des revendications 1 à 6,
**caractérisé en ce qu'**une bougie d'allumage traditionnelle sert de dispositif d'allumage commandé (8), le point d'allumage (20) formé par la ou les électrodes (10) pouvant plonger approximativement complètement dans la cavité (6).

8. Moteur à combustion interne selon l'une des revendications 1 à 7,
**caractérisé en ce que** le dispositif d'allumage commandé (8) est conformé, dans la zone de son extrémité (9) libre, en tant qu'unité au moins très principalement fermée, une bougie d'allumage (17) de chambre de précombustion pouvant servir de dispositif d'allumage commandé (8), la bougie d'allumage (17) de chambre de précombustion comprenant de préférence une électrode centrale multiple (24) à plusieurs segments d'étincelles d'allumage (25), deux électrodes d'allumage (10) opposées l'une à l'autre pouvant être disposées dans la chambre de précombustion (18) et l'électrode d'allumage (10) ou respectivement les électrodes d'allumage étant coniques à l'extrémité libre.

9. Moteur à combustion interne selon la revendication 8,
**caractérisé en ce que** la chambre de précombustion (18) entourant le point d'allumage (20) plonge au moins partiellement dans la cavité (6), la chambre de précombustion (18) étant formée adaptée avec jeu à la cavité (6) ou respectivement la paroi (14) de la cavité, la chambre de précombustion (18) étant formée sensiblement cylindrique et présentant un volume intérieur sensiblement cylindrique.

10. Moteur à combustion interne selon la revendication 8 ou 9,
**caractérisé en ce que** des canaux de débordement (19) conduisant radialement et/ou tangentiellement hors de la chambre de précombustion (18) dans la chambre de combustion (1) sont formés de préférence dans la zone médiane de la partie en saillie dans la chambre de combustion (1) de la bougie d'allumage (17) de la chambre de précombustion, un canal de débordement (27) s'étendant à peu près centralement dans la chambre de précombustion (18) étant formé dans l'extrémité libre de la partie en saillie dans la chambre de combustion (1) de la bougie d'allumage (17) de la chambre de précombustion et de préférence plusieurs canaux de débordement (21, 23) reliés aux canaux de débordement (21, 23) restants et/ou directement à la chambre de précombustion (18).

11. Moteur à combustion interne selon la revendication 10,
**caractérisé en ce que**, dans le cas d'une bougie d'allumage (17) de chambre de précombustion plongée dans la cavité (6), au moins un canal de débordement (23) s'étendant dans la chambre de précombustion (18) débouche dans la zone de bord supérieur de la cavité (6).

12. Moteur à combustion interne selon la revendication 10 ou 11,
**caractérisé en ce que**, dans le cas d'une bougie d'allumage (17) de chambre de précombustion plongée dans la cavité (6), au moins un canal de débordement (23) s'étendant dans la chambre de précombustion (18) débouche en dehors de la cavité (6).

13. Moteur à combustion interne selon l'une des revendications 10 à 12,
**caractérisé en ce que** des rainures (28) sont formées, dans la paroi extérieure de la zone de la bougie d'allumage (17) plongeant dans la cavité (6), s'étendant depuis l'extrémité libre dans la zone des canaux de débordement (23).

14. Moteur à combustion interne selon l'une des revendications 1 à 13,
**caractérisé en ce que** l'injecteur (7) est disposé et orienté de telle manière qu'un axe (35) de jet d'injection orienté dans la cavité (6) se produit au moins temporairement au cours du déplacement du piston.

15. Moteur à combustion interne selon l'une des revendications 1 à 14,
**caractérisé en ce que** l'injecteur est disposé et orienté de telle manière que les projections du cône du jet d'injection sur le piston (4) et la cavité (6) se superposent au moins partiellement au moins temporairement au cours du déplacement du piston.

16. Moteur à combustion interne selon l'une des revendications 1 à 15,
**caractérisé en ce que** le dispositif d'allumage commandé (8) et la buse d'injection (7) forment une unité constructive, la buse d'injection (7) étant partie intégrante d'une électrode, de préférence de l'électrode centrale.

17. Moteur à combustion interne selon l'une des revendications 1 à 16,
**caractérisé en ce que** la cavité (6) est revêtue d'un matériau à haute résistance à chaud, de préférence sous forme d'une douille emboîtée.
